# EUROPÄISCHE PATENTSCHRIFT

(11) **EP 2 881 252 B1**
(45) Veröffentlichungstag und Bekanntmachung des Hinweises auf die Patenterteilung: **06.02.2019**
(21) Anmeldenummer: 14196807.3
(22) Anmeldetag: 08.12.2014
(51) Int. Cl.: B32B 27/20, B32B 27/08, B32B 27/12, B32B 27/30, B32B 27/32, B32B 27/34, B32B 27/40, B32B 1/08, F16L 55/165

(54) **UV- und lichtundurchlässige schlauchförmige Außenfolie eines Einlegeschlauches mit hoher Reflexion**
UV and light shielding film with high reflectance forming the tubular outer layer of an insert hose
Film opaque à la lumière et aux UV ayant une réflectance élevée formant la couche tubulaire externe d'une gaine d'insertion

(30) Priorität: 09.12.2013 DE 102013113718
(43) Veröffentlichungstag der Anmeldung: 10.06.2015
(73) Patentinhaber: Buergofol GmbH, 93354 Siegenburg (DE)
(72) Erfinder: Stark, Kurt, 91284 Neuhaus a. d. Pegnitz (DE)
(74) Vertreter: Schlief, Thomas P.

(56) Entgegenhaltungen:
- EP-A1- 1 876 015
- WO-A1-2009/070494
- WO-A1-2011/157356
- WO-A1-2013/026568

## Beschreibung

Die Erfindung betrifft eine mehrschichtige schlauchförmige Außenfolie für einen Einlegeschlauch eines Rohrsanierungssystems.

Derartige schlauchförmige Außenfolien, auch Schlauchaußenfolien oder Außenschlauchfolien genannt, sind seit einigen Jahren als Teil von Einlegeschläuchen bei der Rohrsanierung, wie beispielsweise der grabenlosen Kanalrohrsanierung, im praktischen Einsatz. Diese Art von Kanalreparatur bietet aufgrund ihrer umweltschonenden und mit geringem Aufwand durchzuführenden Methodik große Vorteile. Es wird hierbei ein flexibler Einlegeschlauch (auch Schlauchliner oder lediglich Liner genannt) in das zu sanierende Rohr eingezogen (Einzugsverfahren), wobei der Einlegeschlauch über eine zuvor in dem Kanalrohr verlegte Gleitfolie bzw. einen sog. Preliner gleitet.

Ein derartiger Einlegeschlauch (Schlauchliner) weist beim System Glasfaser-Schlauchliner mit UV- oder Dampfhärtung üblicherweise einen inneren und einen äußeren Schlauch (Innen- bzw. Außenschlauch) auf, zwischen denen ein Trägermaterial aus beispielsweise Glasfasern eingebracht ist, welches mit reaktivem Kunststoffharz getränkt ist. Die Schlauchform des Außenschlauches wird hierbei durch entsprechendes Formen und Verschweißen von Flachfolien erhalten. Als reaktives Kunststoffharz kommen zum Beispiel handelsübliche UP-Harze (Polyester- bzw. ungesättigte Polyesterharze), VE-Harze (Vinylesterharze) oder EP-Harze (Epoxid-Harze) zum Einsatz. Die Härtung der Harze erfolgt bei UP- oder VE-Harzen zum Beispiel mit Hilfe von Photoinitiatoren (als Radikalbildner). Die Härtung kann aber auch thermisch erfolgen. Der Einlegeschlauch wird im Rohr solange aufgeblasen, bis er an der Rohrinnenwand bzw. der Gleitfolie bzw. dem Preliner anliegt, um anschließend das Harz - beispielsweise mittels UV-Licht aus einer langsam durch das Rohr gezogenen UV-Lichtquelle - auszuhärten. Zum Schluss wird die innere Schlauchfolie des Einlegeschlauchs meist abgezogen und entfernt. Die Schicht mit dem Trägermaterial und dem gehärteten Harz ist dann den durch das Rohr zu leitenden Substanzen exponiert.

Damit das Harz im Einlegeschlauch bei der Lagerung, d.h. vor dem Verbauen im Rohr, durch die UV-Strahlung des Sonnenlichts nicht vorzeitig aushärtet, ist es aus der WO 2013/026568 A1 bekannt, eine UV-Strahlung und ggf. kurzwelliges Licht absorbierende und/oder reflektierende Substanz in eine Außenschicht bzw. eine der Außenseite nahe Schicht einzubringen, wobei zu diesem Zweck nicht-silbrige Metalloxide, Übergangsmetalloxide und andere anorganische und organische Verbindungen eingesetzt werden können. In einer Schicht, die auf der zum Harz gewandten anderen Außenseite der Außenfolie angeordnet ist, ist eine UV-Strahlung reflektierende anorganische Verbindung eingebracht, vorzugsweise ein Weißpigment. Diese Maßnahme dient zum Reflektieren von UV-Strahlung, welche von einer durch das Rohr zu ziehenden UV-Quelle ausgeht und das Harz schon einmal durchdrungen hat, um die Effizienz und Geschwindigkeit des Aushärteprozesses zu steigern. Es hat sich allerdings herausgestellt, dass sowohl die Dichtheit und blockende Wirkung gegen UV-Licht und sichtbares Licht (dort nur für einen eingeschränkten Wellenlängenbereich genannt) als auch die Reflexionsausbeute dieser bekannten schlauchförmigen Außenfolie noch verbesserungswürdig sind.

Eine Alternative ist in der DE 297 00 236 U1 beschrieben, bei der eine außenliegende Hülle metallisch beschichtet ist oder aus einer schraubenförmig um das Trägersystem gewickelten Metallfolie besteht. Diese Anordnung ist allerdings zum Erreichen einer lückenlosen Reflexion kompliziert zu handhaben und aufwändig. Außerdem weist die dort beschriebene Hülle immer noch eine zu hohe Durchlässigkeit für UV-Licht auf, wodurch das darunter liegende Harz nicht vor vorzeitiger Aushärtung geschützt werden kann.

In Bezug auf eine schlauchförmige Außenfolie für einen Einlegeschlauch eines Rohrsanierungssystems ist es die Aufgabe, bei einfacher Handhabung einen optimierten Schutz gegen UV-Strahlung von außen mit einer guten Rückstrahlung von UV-Strahlung, die von einer durch das Rohr zu ziehenden UV-Quelle ausgeht, zu kombinieren.

Diese Aufgabe wird durch die Merkmale des Anspruchs 1 gelöst.

Die Vorteile der Erfindung sind insbesondere darin zu sehen, dass durch den erfindungsgemäßen kombinatorischen Einsatz von silbrigfarbenen Pigmenten in mindestens zwei Schichten bzw. von zwei metallisierten Außenschichten bzw. von mindestens einer Schicht mit silbrigfarbenen Pigmenten und einer metallisierten Außenschicht einerseits und mindestens einem UV-Absorber in mindestens einer Schicht andererseits (diese kann identisch mit einer der vorgenannten Schichten sein oder - was in vielen Ausführungsformen bevorzugt ist - in einer von diesen Schichten verschiedenen Schicht der erfindungsgemäßen Folie sein) hervorragende optischen Eigenschaften hinsichtlich der Transmissionsunterbindung von äußerem UV-Licht und sichtbarem Licht (d.h. nicht von der durch das Rohr zu ziehenden UV-Quelle), z.B. Sonnenlicht, erzielt werden. Die Messungen an erfindungsgemäßen Folien ergaben, dass die Transmissionswerte um einen Faktor von bis ca. 60 gegenüber bisher bekannten Folien, eingesetzt als Außenfolien von Schlauchlinern, reduziert werden konnten. Überdies ist die erfindungsgemäße Folie von beiden Seiten hoch reflektierend gestaltet, d.h. die UV- und sichtbare Strahlung wird in einem Wellenlängenbereich von 200 bis 800 nm, insbesondere ab 300 nm, zu mehr als 20%, von beiden Seiten der Folie reflektiert.

Im Wellenlängenbereich von 200 bis 800 nm ist durch die erfindungsgemäße Kombination des Einsatzes von silbrigfarbenen Pigmenten einerseits und UV-Absorbern andererseits eine Transmission von weniger als 0,1% erzielbar. Da die Transmission auch durch die Schichtdicken bzw. die Foliendicke bestimmt wird (Lambert-Beersches Gesetz, s.u.) ist eine entsprechende - dem Fachmann ohne Weiteres geläufige - Abstimmung mit dem mindestens einen zugesetzten UV-Absorber notwendig, um die besagte Transmissionsobergrenze von 0,1% zu erzielen. Bekanntermaßen gibt der negative Zehnerlogarithmus der Transmission die Extinktion (auch optische Dichte genannt) an, welche ein Wellenlängen-abhängiges Maß für die Opazität, d.h. die Abschwächung einer Strahlung (wie z.B. Licht) nach Durchqueren eines Mediums darstellt. Die Extinktion ist hierbei als *E*_{λ} = - log₁₀ (*I*/*I₀*) = - log₁₀*T* definiert, mit *E*_{λ} = Extinktion, *I* = austretende Strahlung, *I₀* = einfallende Strahlung, *T* = Transmission. An der Extinktion sind i.a. die Prozesse Absorption, Streuung, Beugung und Reflexion beteiligt, wobei die Reflexionsverluste in der obigen Formel schon in der einfallenden Strahlung *I₀* berücksichtigt sind. Streuung und Beugung sind zumeist vernachlässigbar, so auch bei den erfindungsgemäßen Folien. Die obige Formel lässt sich auch in Form des Lambert-Beerschen Gesetzes schreiben: *E*_{λ} = - log₁₀ (*I*/*I₀*) = ε_{λ}∗*c*∗*d,* wobei ε_{λ} den dekadischen Extinktionskoeffizienten bei der Wellenlänge λ angibt, *c* die Absorberkonzentration in der betreffenden Schicht und *d* die Schichtdicke ist. Das Lambert-Beersche Gesetz beschreibt also die Intensitätsabschwächung der in die Folie eindringenden Strahlung in Abhängigkeit von der UV-Absorberkonzentration und der Foliendicke. Gemäß der Erfindung werden die Foliendicke und insbesondere die Dicke der Schicht bzw. der Schichten mit den zugesetzten UV-Absorbern und deren Konzentrationen sowie die silbrigfarbenen Pigmenten in einer oder mehreren Schichten derart aufeinander abgestimmt, dass eine Transmission der Folie in einem Wellenlängenbereich von 200 bis 800 nm geringer ist als 0,1% und die UV- und kurzwellige sichtbare Strahlung in einem Wellenlängenbereich von 200 bis 800 nm zu mehr als 20% reflektiert wird.

Bei der erfindungsgemäßen Außenschlauchfolie sind in dem Wellenlängenbereich von 200 bis 500 nm, in dem die meisten verwendeten Photoinitiatoren zur Harzaushärtung aktiviert werden (also Radikale bilden), sehr niedrige Transmissionswerte und hohe Reflektionswerte von großem Vorteil, da ansonsten eine vorzeitige Harzhärtung bei der Lagerung, beim Einbringen in einen Kanal etc. stattfindet. Häufig werden Harze verwendet, die im Bereich ab 300 nm und insbesondere im Bereich von ungefähr 350 nm bis 400 nm aushärtbar sind.

Unter dem Begriff "silbrigfarben" wird im Sinne der vorliegenden Erfindung der von einem Betrachter wahrgenommene optische Sinneseindruck einer silbrigen Farbe verstanden.

Unter dem Begriff "Pigmente" werden im Sinne der vorliegenden Erfindung farbgebende Substanzen verstanden, die im Gegensatz zu Farbstoffen im Anwendungsbereich unlöslich sind.

Unter den Begriffen "opak", "undurchsichtig" und "blickdicht" wird im Sinne der vorliegenden Erfindung der von einem Betrachter wahrgenommene optische Sinneseindruck der vollständigen Opazität für sichtbares Licht verstanden. Mit anderen Worten kann ein Betrachter nicht durch die Schicht hindurchsehen, d.h. es gelangt kein sichtbares Licht durch die Schicht bzw. die Außenfolie. Der Wellenlängenbereich des sichtbaren Lichts wird vorliegend als von 380 nm bis 780 nm reichend verstanden. Eine erfindungsgemäße Transmission von weniger als 0,1% in einem Wellenlängenbereich von 200 bis 800 nm entspricht hierbei einer vollkommenen Blickdichtigkeit. Es kann hierzu auch ein entsprechender Test dergestalt durchgeführt werden, dass die jeweilige Folie auf eine mit schwarzem Text (Schriftart Arial, Schriftgröße 10) bedruckte weiße DIN A4-Seite gelegt und die Lesbarkeit des darunter liegenden Textes mit einem Schulnotensystem beurteilt wird. Die Note 6 entspricht hierbei dem Befund, dass nicht mehr erkennbar ist, dass ein Text unter der Folie vorhanden ist. Diese Situation kann auch als Kriterium für die genannte Opazität bzw. Blickdichtigkeit bzw. Undurchsichtigkeit der erfindungsgemäßen Folie herangezogen werden.

Der Begriff "schlauchförmig" umfasst vorliegend sowohl schon als Schlauch hergestellte, beispielsweise extrudierte, Folien als auch zu einem Schlauch geformte Flachfolien, was zum Beispiel durch Siegeln, Verschweißen oder Verkleben gelingt.

Vorzugsweise ist zum einen die Art und Menge (in Gew.-%) an silbrigfarbenen Pigmenten in den mindestens zwei Schichten bzw. die besagte doppelseitige Metallisierung bzw. die besagte Mischform von einerseits Schicht mit silbrigfarbenen Pigmenten und andererseits Metallisierung einer Außenschicht und zum anderen die Art und Menge (in Gew.-%) des mindestens einen UV-Absorbers - in Abstimmung mit der Gesamtdicke der Folie und der Dicke der Schicht(en) mit silbrigfarbenen Pigmenten und insbesondere der Dicke der Schicht(en) mit zugesetztem UV-Absorber - derart gewählt, dass die gesamte Außenfolie Strahlung im Wellenlängenbereich von 200 nm bis 800 nm (also sogar geringfügig über den wie oben definierten sichtbaren Bereich hinaus) zu weniger als 0,075% hindurchlässt, vorzugsweise zu weniger als 0,05% und besonders bevorzugt zu weniger als 0,025%.

Sichtbare Strahlung im Wellenlängenbereich von 200 nm bis 800 nm wird durch den Zusatz von silbrigfarbenen Pigmenten und/oder durch die Metallisierung vorzugsweise zu mehr als 20%, vorzugsweise mehr als 30%, am meisten bevorzugt zu mehr als 40%, reflektiert.

Im Falle einer Metallisierung ist die optische Dichte der erfindungsgemäßen Folie vorzugsweise größer als 1, besonders bevorzugt größer als 2.

Bei der erfindungsgemäßen Außenschlauchfolie für einen Schlauchliner ist eine der beiden Schichten mit den silbrigfarbenen Pigmenten gemäß einer bevorzugten Ausführungsform diejenige Außenschicht, die zum Schlauchinneren, d.h. zum Harz und zur Schlauchinnenfolie, gerichtet ist. Die besagte Außenschicht dient in der Hauptsache zum Zurückwerfen der von einer UV- oder Licht-Quelle ausgesandten UV- oder Licht-Strahlung, die durch den im Kanalrohr aufgeblasenen Einlegeschlauch hindurchgezogen wird. Hierdurch wird die UV- oder Licht-Strahlung, die durch das auszuhärtende Harz unerwünschtermaßen hindurchgelangt, ohne die Photoinitiierung des Photoinitiators auszulösen, an den silbrigfarbenen Pigmenten reflektiert und wieder zum Harz gerichtet. Damit erhöht sich die Geschwindigkeit und Gleichmäßigkeit der Harzaushärtung; zudem wird die Energie der UV- und Licht-Strahlen effizient ausgenutzt.

Zusätzlich ist die mindestens eine weitere, silbrigfarbene Pigmente enthaltende Schicht bevorzugt die Harz-abgewandte Außenschicht, ist also zum sanierenden Rohr gerichtet. Diese Außenschicht verhindert, ebenfalls durch ihr sehr hohes Reflektionsvermögen, dass UV- und sichtbares Licht (Tageslicht) zum Harz gelangt und dieses vorzeitig bei insbesondere der Lagerung aushärtet.

Dementsprechend sind in der erfindungsgemäßen Schlauchaußenfolie gemäß einer bevorzugten Ausführungsform silbrigfarbene Pigmente vorzugsweise in den beiden Außenschichten eingebracht. Die näher zum Harz befindliche diesbezügliche Schicht ist dafür vorgesehen, Licht von der durch den aufgeblasenen Einlegeschlauch gezogenen UV-Quelle zum Harz zurück zu reflektieren (s.o.), während die weiter außen gelegene diesbezügliche Schicht insbesondere zum Reflektieren von Tageslicht dient. Hierbei unterstützt auch jede der beiden Schichten die Wirkungsweise der anderen Schicht. Die wenigen Lichtanteile, die beispielsweise trotz der silbrigfarbenen Pigmente durch die entsprechende äußere Schicht dringen, werden dann nochmals zumindest an den silbrigen Pigmenten der weiter innen liegenden Schicht reflektiert.

Die Schichten mit den silbrigfarbenen Pigmenten sind jedoch nicht zwangsläufig als Außenschichten der erfindungsgemäßen Folie ausgebildet. Beispielsweise kann eine dieser Schichten (oder beide) eine innenliegende Schicht sein. Es ist in diesem Fall aber bevorzugt, dass die Außenschichten transparent sind, so dass das hohe Reflektionsvermögen der (innenliegenden) Schichten mit den silbrigfarbenen Pigmenten erhalten bleibt.

Bei einer Alternative sind beide Außenschichten der erfindungsgemäßen Außenfolie metallisiert, wobei die gleichen Wirkungen wie bei der Pigmentzumischung in die zwei Außenschichten erzielbar sind. Bei einer weiteren Alternative ist eine Außenschicht metallisiert, während in mindestens einer Schicht die besagten silbrigfarbenen Pigmente eingebracht sind, wobei diese Schicht beispielsweise die andere Außenschicht oder eine innenliegende Schicht ist.

Die silbrigfarbenen Pigmente sind vorzugsweise aus einer Gruppe ausgewählt, die umfasst:
- Metallische Pigmente, vorzugsweise vom Leafing-Typ, ausgenommen solche aus Zink oder Zinn;
- Metalleffektpigmente, basierend auf z.B. Aluminium, Silber, Nickel, Chrom, Quecksilber, Amalgam, oder Legierungen besagter Metalle, ausgenommen solche basierend auf Zink oder Zinn;
- Perlglanzpigmente; und
- Metallisierte Träger, z.B. metallisierte Perlglanzpigmente (Glimmerpigmente), beispielsweise durch Aluminium Bedampfung.

Die metallischen Pigmente und Effektpigmente können insbesondere sein: Aluminium, Titan, Chrom, Nickel, Amalgam (Quecksilber-Legierung) oder Silber oder eine Silberlegierung.

Kombinationen der obigen Substanzen sind hierbei ohne weiteres möglich. So kann insbesondere durch eine Mischung von Aluminium-Pigmenten und Perlglanzpigmenten eine sehr hohe Reflexion realisiert werden.

Bei den obigen Aufzählungen sind Zink und Zinn herausgenommen. Diese sind unedle Metalle, die an Luft oder Wasser korrodieren. Dieser Effekt, der insbesondere bei einer entsprechenden Verwendung dieser Metalle in den Außenschichten auftreten könnte, ist unerwünscht, da die Reflexionseigenschaften beeinträchtigt würden. Außerdem könnten sich diese Metalle von der Folie lösen (etwa Salzbildung) und dann ins Grundwasser gelangen. Aluminium hingegen ist zwar auch ein unedles Metall, bildet aber eine schützende Oxidschicht aus und ist daher korrosions- und witterungsbeständig.

Es hat sich als vorteilhaft erwiesen, wenn die Pigmentgrößen der silbrigfarbenen Pigmente im Bereich von 0,1 µm bis 100 µm liegen, vorzugsweise im Bereich von 1 µm bis 75 µm, besonders bevorzugt im Bereich von 5 µm bis 50 µm. Die Konzentration der Pigmente in den silbrigfarbenen Schichten beträgt vorteilhafterweise von 0,01 Gew.-% bis 50 Gew.-%, vorzugsweise von 0,1 bis 50 Gew.-%, besonders bevorzugt von 1 bis 30 Gew.-%.

Wird mindestens eine der Außenschichten der erfindungsgemäßen Folie metallisiert, ist das Material dieser Metallisierung vorzugsweise Aluminium, Titan, Chrom, Nickel, Amalgam (Quecksilber-Legierung) oder Silber oder eine Silberlegierung.

Gemäß einer bevorzugten Ausführungsform sind in der zum Schlauchäußeren gerichteten Außenschicht - zusätzlich zu den silbrigfarbenen Farbstoffen oder Farbpigmenten - auch andersfarbige Farbstoffe oder Pigmente eingebracht. Die hohe Reflektionswirkung bleibt dabei erhalten. Hierdurch kann eine firmenspezifische Kennung des Schlauchliners oder des sanierten Rohres erfolgen. Bei einer entsprechenden Ausführungsform können in einer oder mehreren weiter innenliegenden Schichten silbrigfarbene Pigmente vorhanden sein, welche für die Reflexion des Lichts sorgen. Der farbliche Eindruck von außen kann dann auch in einer Überlagerung der andersfarbigen mit den silbrigfarbenen Pigmenten bestehen. Diese andersfarbige Schicht ist aber zweckmäßigerweise durchsichtig, so dass die reflektierende Wirkung der weiter innenliegenden Schichten mit silbrigfarbenen Pigmenten erhalten bleibt.

Vorzugsweise enthalten - vorteilhafterweise zu mehr als 50 Gew.-% - die Schichten (mit Vorteil mindestens eine), in welcher silbrigfarbene Pigmente eingebracht sind oder auf welche eine Metallisierung aufgebracht ist, mindestens ein thermoplastischen Olefin-Homo- oder Copolymer, wobei dieses gegebenenfalls modifiziert ist. Diese Verbindungen haben sich insbesondere als Außenschichten für Schlauchaußenfolien bewährt. Sie bieten gute mechanische Eigenschaften und sind auch bei der Herstellung der Folien einfach zu handhaben.

Alternativ enthalten - vorteilhafterweise zu mehr als 50 Gew.-% - eine oder beide der Außenschichten der erfindungsgemäßen Schlauchaußenfolie mindestens ein Polyamid, gegebenenfalls modifiziert. Die Polyamid-Schicht ist durchsichtig.

Allgemein können eine oder beide Außenschichten der erfindungsgemäßen Folie durchsichtig bzw. transparent sein. Auch Haftvermittlerschichten mit mindestens einem zugesetzten UV-Absorber können durchsichtig sein. Ist beispielsweise der Schichtaufbau einer erfindungsgemäßen Folie: Schicht (a): Polyamid bzw. Mischung mit überwiegend Polyamid [abgekürzt: Polyamid(-Mischung)]; Schicht (b): Polyamid(-Mischung); Schicht (c): Haftvermittler mit UV-Absorber; Schicht (d): thermoplastisches Olefin-Homo- oder Copolymer oder Mischung mit überwiegend einer solchen Verbindung [abgekürzt: PE(-Mischung)] mit silbrigfarbenen Pigmenten; Schicht (e): PE(-Mischung) mit silbrigfarbenen Pigmenten, dann können die Schichten (a)-(c) durchsichtig sein, so dass von beiden Seiten auf die Folie treffendes Licht an den Schichten (d) und (e) reflektiert wird.

Alternativ zu dem oben genannten Polyamid-Anteil enthalten - vorteilhafterweise zu mehr als 50 Gew.-% - eine oder beide der Außenschichten der erfindungsgemäßen Schlauchaußenfolie mindestens ein Thermoplastisches Elastomer (TPE), insbesondere TPU, gegebenenfalls modifiziert.

Vorzugsweise ist die Art und Menge (in Gew.-%) an dem zugesetzten mindestens einen UV-Absorber in der mindestens einen Schicht derart gewählt, dass Strahlung in dieser Schicht (und damit auch in der gesamten Folie) in einem Wellenlängenbereich von 200 nm bis 450 nm, vorzugsweise im Wellenlängenbereich der UV-Strahlung von 250 bis 400 nm, zu mehr als 95%, vorzugsweise zu mehr als 98%, besonders bevorzugt zu mehr als 99,5% absorbiert wird. Alternativ kann der mindestens eine UV-Absorber auch in mehreren Schichten in derartiger Art und Menge enthalten sein, dass in der gesamten erfindungsgemäßen Folie Strahlung von 200 nm bis 450 nm zu mehr als 95%, vorzugsweise zu mehr als 98%, besonders bevorzugt zu mehr als 99,5% absorbiert wird.

Der Begriff "UV-Licht" wird vorliegend als von 200 nm bis 400 nm reichend verstanden. Da es keinen allgemein akzeptierten unteren oder oberen Grenzwert der UV-Strahlung gibt, wird vorliegend davon ausgegangen, dass es einen Überlappungsbereich von UV- und sichtbarer Strahlung gibt, der von ca. 380 nm bis ca. 400 nm reicht.

UV-Absorber absorbieren häufig auch über den UV-Bereich hinaus, beispielsweise etwa bis 450 nm. Der Grund liegt darin, dass UV-Absorber auch eine Eigenfarbe haben, die meist gelblich ist. Die Absorption findet dann auch im Ultravioletten bis Blauen statt.

Der besagte mindestens eine UV-Absorber kann anorganischer oder organischer Natur sein. Im Falle eines anorganischen UV-Absorbers kann dieser z.B. ein Metalloxid sein, wobei unter dem Begriff Metalloxide auch Übergangsmetalloxide fallen. Zu den geeigneten Metalloxiden zählen beispielsweise Titandioxid, Eisenoxid und Zinkoxid. Ein vorteilhaftes Beispiel für ein Zinkoxid ist Zincox®, das von der IBU-tec advanced materials AG, Weimar, entwickelt wurde; Zincox® ist ein nanoskaliges ZnO mit einer mittleren Partikelgröße von 10 nm, welches im technischen Maßstab als Pulver oder als desagglomerierte, stabilisierte und sehr leicht verarbeitbare Suspension erhältlich ist. Auch als UV-Absorber geeignete Metalloxidhydrate, welche auch Übergangsmetalloxidhydrate umfassen, sind einsetzbar. Als organische Verbindungen sind z.B. Benzotriazole, Triazine, Benzophenone und Cyanoacrylate verwendbar. Auch Derivate der vorgenannten Verbindungen können eingesetzt werden, Mischungen aus den vorgenannten Verbindungen ebenfalls. Bevorzugt sind anorganische UV-Absorber.

Es hat sich als vorteilhaft erwiesen, wenn der mindestens eine UV-Absorber in der besagten Schicht in einer Konzentration von 0,01 bis 20 Gew.-% enthalten ist, bevorzugt von 0,1 bis 10 Gew.-% und am meisten bevorzugt von 0,5 bis 5 Gew.-%.

Mit Vorteil ist der mindestens eine UV-Absorber in eine Haftvermittlerschicht (HV) eingebracht. Dies vermeidet etwa eine Migration des UV-Absorbers aus der Folie und sichert so seine dauerhafte Wirkungsweise. Beispielsweise im Falle eines Aufbaus der Außenfolie als 5-Schicht-Folie in der Form PE (Polyethylen) / HV / PA (Polyamid) / HV / PE kann in einer oder - was bevorzugt ist - beiden Haftvermittlerschichten der mindestens eine UV-Absorber eingebracht sein. In einer oder beide PE-Außenschichten können bei derartigen Ausführungsformen, in denen in mindestens einer Haftvermittlerschicht der mindestens eine UV-Absorber eingesetzt wird, beispielsweise silbrigfarbene Pigmente eingebracht sein. Eine diesbezügliche beispielhafte Schichtfolge bei einer 7-Schicht-Folie ist PE/PE/HV/PA/HV/PE/PE. Hierbei bedeutet die Formulierung "PE-Schicht" bzw. "PA-Schicht", dass die betreffende Schicht überwiegend Polyethylen bzw. Polyamid enthält.

Gemäß einer vorteilhaften Ausführungsform ist der mindestens eine UV-Absorber in eine Schicht eingebracht, die an eine der Außenschichten der Außenfolie angrenzt. Hierdurch wird zumindest ein Teil der UV-Strahlung in der dem Harz am nächsten liegenden Schicht "abgefangen". Wenn in der angrenzenden Außenschicht zudem die besagten silbrigfarbenen Pigmente vorhanden sind und/oder die besagte Metallisierung aufgebracht ist, gelangt ohnehin nur ein kleinerer Anteil an Strahlung in die Schicht mit dem mindestens einen UV-Absorber.

Eine weitere vorteilhafte Ausführungsform sieht vor, dass mindestens ein UV-Absorber in mindestens zwei Schichten der schlauchförmigen Außenfolie eingebracht ist. In diesem Zusammenhang ist es bevorzugt, dass diese beiden Schichten jeweils innenliegende Schichten der Folie sind und hierbei vorzugsweise jeweils innenseitig an eine der Außenschichten der Außenfolie angrenzen. In den jeweiligen Außenschichten sind beispielsweise die silbrigfarbenen Pigmente eingebracht (bzw. eine Metallisierung aufgebracht) und in den beiden nach innen angrenzenden Schichten der oder die UV-Absorber.

Auch sind Ausführungsformen möglich, bei denen in einer Schicht (oder mehreren) sowohl silbrigfarbene Pigmente als auch mindestens ein UV-Absorber eingebracht sind.

Die Schichten, in denen die silbrigfarbenen Pigmente und/oder UV-Absorber eingebracht sind, enthalten besonders bevorzugt mindestens ein thermoplastisches Olefin-Homo- oder Copolymer, gegebenenfalls modifiziert. Ist beispielsweise der mindestens eine UV-Absorber in einer Haftvermittlerschicht (s.o.) aus einem Olefin-Homo- oder Copolymer vorhanden, ist dieses vorzugsweise mit mindestens einer organischen Säure oder einem cyclischen organischen Säureanhydrid modifiziert, bevorzugt mit Maleinsäureanhydrid.

Mindestens eine, vorzugsweise beide Außenschichten der erfindungsgemäßen Mehrschichtfolie enthalten bevorzugt mindestens ein thermoplastisches Olefin-Homo- oder Copolymer, gegebenenfalls modifiziert. Auch ggf. vorhandene Haftvermittlerschichten sind vorzugsweise derartig aufgebaut.

Bevorzugte Olefin-Homo- oder Copolymere sind solche von a,β-ungesättigten Olefinen mit 2-10 Kohlenstoffatomen. Es eignen sich hierbei vorzugsweise Ethylen-Homopolymere (Polyethylene, PE), vorzugsweise LDPE (Polyethylen hoher Dichte im Bereich von 0,86-0,93 g/cm³), LLDPE (Linear Low Density Polyethylene), HDPE (Polyethylen hoher Dichte im Bereich von 0,94 und 0,97 g/cm³) und mPE (auf Basis von Metallocen-Katalysatoren polymerisierte PE), Propylen-Homopolymere (Polypropylene, PP), Butylen-Homopolymere (Polybutylene, PB) und Isobutylen-Homopolymere (Polyisobutylene, PI) oder Mischungen aus mindestens zwei der genannten Polymere. Diese Olefin-Homo- oder Copolymere können in den Schichten, die silbrigfarbene Pigmente und/oder UV-Absorber enthalten, eingesetzt werden.

Insbesondere für die Rohrsanierung ist es sehr vorteilhaft, wenn mindestens eine innenliegende Barriereschicht gegen den Durchtritt von Gasen und/oder chemischen Substanzen vorgesehen ist, wobei die Barriereschicht vorzugsweise Ethylenvinylalkohol (EVOH) oder Polyamid (PA) oder Cyclo-Olefin-Copolymer (COC) oder eine Kombination von diesen enthält, bevorzugt jeweils mit bis zu 100 Gew.-% aus diesen Verbindungen. Als Polyamide können vorzugsweise Homo- oder Copolyamide verwendet werden, vorzugsweise PA 6, PA 12, PA 66, PA 6I und PA 6T. Auch entsprechende Copolymere oder Mischungen aus mindestens zwei Polyamiden sind ohne weiteres möglich.

Ist beispielsweise eine PA-Barriereschicht vorgesehen, kann diese entweder zu einer Seite oder zu ihren beiden Seiten mit jeweils einer Haftvermittlerschicht mit jeweils einer Schicht, vorzugsweise jeweils einer Außenschicht, verbunden werden. Enthalten diese beiden äußeren Schichten überwiegend (bis zu 100 Gew.-%) ein thermoplastisches Olefin-Homo- oder Copolymer, gegebenenfalls modifiziert, wird der schon oben genannte 5-Schicht-Aufbau PE / HV / PA / HV / PE erhalten, wobei in den PE- und HV-Schichten die silbrigfarbenen Pigmente bzw. der besagte mindestens eine UV-Absorber enthalten sind.

Besonders bevorzugt weist die erfindungsgemäße Folie mindestens zwei, vorzugsweise genau zwei, Schichten mit besagten silbrigfarbenen Pigmenten und mindestens zwei, vorzugsweise genau zwei, Schichten mit jeweils mindestens einem UV-Absorber auf. Hierbei ist der Schichtaufbau der Folie bezüglich der genannten Schichten gemäß vorteilhafter Ausführungsformen symmetrisch, wobei die Schichten mit dem jeweils mindestens einen UV-Absorber zwischen den Schichten mit den silbrigfarbenen Pigmenten angeordnet sind. Der symmetrische Aufbau hat den Vorteil, dass einerseits nicht auf die Wicklung dieser Folie geachtet werden muss, und dass andererseits auch beim Siegeln einer flachen, erfindungsgemäßen Folie zum Außenfolien-Schlauch nicht mehr darauf geachtet werden muss, dass stets nur die reflektierende Seite nach innen, zur Kanalachse, angeordnet ist. Hierdurch ist die Handhabung vereinfacht und die Fehleranfälligkeit minimiert.

Vorgenannte Ausführungen treffen analog auf eine Folienausbildung mit zwei metallisierten Außenschichten und mindestens zwei, vorzugsweise genau zwei, Schichten mit besagtem mindestens einen UV-Absorber zu, wobei auch hier der Folienaufbau vorteilhafterweise symmetrisch ist.

Gemäß vorteilhafter Ausführungsformen weist eine erfindungsgemäße Außenfolie für einen Einlegeschlauch eines Rohrsanierungssystems einen Schichtaufbau aus der folgenden Gruppe auf, wobei die Schicht (a) zur Rohrwand und die Schicht (e) zur Rohrachse zeigend vorgesehen ist:
1)
   Schicht (a): PA oder PA-Mischung; (durchsichtig)
   Schicht (b) Haftvermittler mit UV-Absorber; (durchsichtig)
   Schicht (c): PE oder PE-Mischung mit silbrigfarbenen Pigmenten;
   Schicht (d): PE oder PE-Mischung mit silbrigfarbenen Pigmenten;
   Schicht (e): PE oder PE-Mischung mit silbrigfarbenen Pigmenten;
   mit ggf. weiteren, ggf. durchsichtigen, innen- und/oder außenliegenden Schichten;
2)
   Schicht (a): PA oder PA-Mischung; (durchsichtig)
   Schicht (b): PA oder PA-Mischung; (durchsichtig)
   Schicht (c): Haftvermittler mit UV-Absorber; (durchsichtig)
   Schicht (d): PE oder PE-Mischung mit silbrigfarbenen Pigmenten;
   Schicht (e): PE oder PE-Mischung mit silbrigfarbenen Pigmenten;
   mit ggf. weiteren, ggf. durchsichtigen, innen- und/oder außenliegenden Schichten;
3)
   Schicht (a): PE oder PE-Mischung mit silbrigfarbenen Pigmenten;
   Schicht (b): Haftvermittler mit UV-Absorber;
   Schicht (c): PA oder PA-Mischung;
   Schicht (d): Haftvermittler mit UV-Absorber;
   Schicht (e): PE oder PE-Mischung mit silbrigfarbenen Pigmenten;
   mit ggf. weiteren, ggf. durchsichtigen, innen- und/oder außenliegenden Schichten;
4)
   Schicht (a): PA oder PA-Mischung; (durchsichtig)
   Schicht (b): Haftvermittler mit UV-Absorber; (durchsichtig)
   Schicht (c): PE oder PE-Mischung mit silbrigfarbenen Pigmenten;
   Schicht (d): Haftvermittler mit UV-Absorber;
   Schicht (e): PE oder PE-Mischung mit silbrigfarbenen Pigmenten;
   mit ggf. weiteren, ggf. durchsichtigen, innen- und/oder außenliegenden Schichten;

Bei den genannten Folien und auch bei anderen Schichtaufbauten einer erfindungsgemäßen Folie kann optional jeweils zusätzlich mindestens ein UV-Absorber in mindestens einer der Innenschichten der jeweiligen Folie zugesetzt sein. Bei der obigen Folie 1) also beispielsweise in den Schichten (c) und/oder (d), bei der obigen Folie 2) also beispielsweise in der Schichten (d), und bei der obigen Folie 4) also beispielsweise in der Schichten (c).

Unter dem Begriff "PE oder PE-Mischung" ist vorliegend mindestens ein thermoplastisches Olefin-Homo- oder Copolymer (zur Abkürzungszwecken wird hier Polyethylen (PE) verwendet) oder eine Mischung mit überwiegend einer solchen Verbindung zu verstehen (zu denen dann entsprechend der obigen Aufzählungen jeweils silbrigfarbene Pigmente zugesetzt sein können). Unter dem Begriff "PA oder PA-Mischung" ist zu verstehen, dass diese Schicht aus mindestens einem Polyamid oder aus einer Mischung mit überwiegend Polyamid besteht.

Bevorzugt beträgt die Gesamtdicke der erfindungsgemäßen Folie zwischen 10 µm und 1000 µm, vorzugsweise zwischen 20 µm und 500 µm, und besonders bevorzugt zwischen 30 µm und 400 µm.

Die erfindungsgemäße Folie kann auch noch mit einer anderen Folie oder mit einem für Harz und Flüssigkeiten saugfähigen Material und insbesondere mit einem für Harz und Flüssigkeiten saugfähigen Material ein- oder beidseitig kaschiert werden, um einen entsprechenden Verbund zu erhalten. Beispielsweise kann die erfindungsgemäße Folie, wenn diese als Schlauchaußenfolie ausgebildet ist, mit einer Gleitfolie kaschiert sein, um ein gleitreibungsreduziertes, beschädigungsfreies Einbringen dieses Verbundes in ein zu sanierendes Rohr zu realisieren.

Alternativ oder zusätzlich kann die erfindungsgemäße Folie mit einer Schicht aus einem für Harz und/oder Flüssigkeiten saugfähigen Material kaschiert werden. Es wird damit ein Verbund erhalten, der die erfindungsgemäße UV-Lichtschutzfolie mit einer z.B. mit Harz zu tränkenden oder getränkten Vliesschicht kombiniert und somit das Handling wesentlich vereinfacht. Insbesondere kann damit die Anbindung der UV- und lichtundurchlässigen Außenfolie an den das Harz inklusive Träger erreicht werden, was zu einer erhöhten Stabilität des Liners führt. Schließlich wird - durch die Verbindung mit einem für Harz oder Flüssigkeiten saugfähigen Material - ein enges Anschmiegen der Außenfolie mit dem mit Harz getränkten Trägermaterial erzielt. So bietet die Außenfolie keine Angriffsfläche, um beim Einziehen des Schlauchliners beschädigt zu werden, indem die Außenfolie zu weit vom Trägermaterial mit Harz absteht. Zudem werden zusätzlich auch Lufteinschlüsse (Luftblasen) vermieden. Als bzgl. Harz oder Flüssigkeiten saugfähige Materialen (oder damit tränkbare bzw. imprägnierbare Materialien) können insbesondere aus Fasern bestehende Materialien verwendet werden, vorzugsweise Vliese, Filze, Gewebe, Gewirke, Gestricke, Gelege, Textilien allgemein, aber auch Schaumstoffe. Saugfähig bedeutet dabei, dass die Flüssigkeit oder das Harz vom Material - zumindest teilweise - aufgenommen werden kann. Im Idealfall wird das Material von Harz und Flüssigkeit durchtränkt.

Im Rahmen dieser Erfindung wird unter dem Begriff "Vlies" ein Gebilde aus Fasern begrenzter Länge, Endlosfasern oder geschnittenen Garnen jeglicher Art und jeglichen Ursprungs verstanden, die auf irgendeine Weise zu einem Vlies bzw. einer Faserschicht oder einem Faserflor zusammengefügt und auf irgendeine Weise miteinander verbunden worden sind. Hierunter fallen nicht das Verkreuzen bzw. Verschlingen von Garnen, wie es beim Weben, Wirken, Stricken, der Spitzenherstellung, dem Flechten und der Herstellung von getuften Erzeugnissen geschieht. Der überwiegende Teil der Vliesstoffe sind flexible textile Flächengebilde, da sie aus textilen Fasern als Hauptstrukturelement aufgebaut sind.

Als Gewebe kann beispielsweise ein Jeansstoff verwendet werden. Auch andere Gewebe, Gestricke, Gewirke etc. können verwendet werden, solange sie Harz oder Flüssigkeiten aufsaugen können oder damit getränkt werden können.

Teil der Erfindung ist auch ein Einlegeschlauch für das Schlauchlining-Verfahren zur Rohrsanierung, insbesondere zur grabenlosen Kanalsanierung, wobei der erfindungsgemäße Einlegeschlauch die zuvor beschriebene schlauchförmige Außenfolie umfasst, sowie eine schlauchförmige, für UV-Strahlung durchlässige Innenfolie, und ein zwischen diesen beiden Folien angeordnetes Trägermaterial, das mit einem reaktiven Kunststoffharz getränkt ist. Die Erfindung betrifft ebenfalls die entsprechende Verwendung eines solchen Einlegeschlauchs zur Sanierung eines Rohrs, vorzugsweise eines unterirdisch verlegten Kanalrohrs.

Die genannte UV-durchlässige Innenfolie ist bevorzugt gemäß dem Stand der Technik aufgebaut, wie beispielsweise in der WO 2013/026568 A1 beschrieben.

Die Erfindung wird nachfolgend anhand eines Ausführungsbeispiels näher erläutert. Es zeigen:
- **Fig. 1**: einen Schlauchliner im Querschnitt;
- **Fig. 2**: einen Querschnitt durch die Außenfolie des Schlauchliners mit angrenzender Harzschicht gemäß der Fig. 1;
- **Fig. 3**: ein zu sanierendes Kanalrohr mit einem Preliner und dem Schlauchliner gemäß der Fig. 1, im Querschnitt.

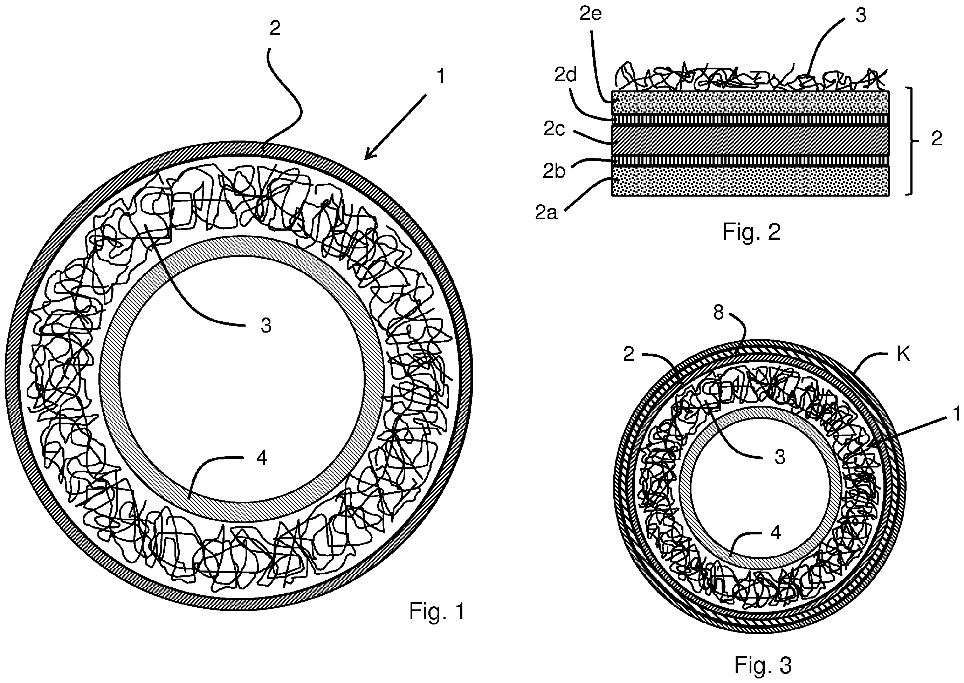

In der Fig. 1 ist ein Schlauchliner bzw. Einlegeschlauch 1 im aufgeblasenen Zustand dargestellt, um ein zu sanierendes Kanalrohr K (s. Fig. 3) auszukleiden. Der Schlauchliner 1 weist eine Schlauchaußenfolie bzw. schlauchförmige Außenfolie 2, ein Harz-Trägersystem 3 sowie eine Schlauchinnenfolie 4 auf. Dieser Aufbau eines Schlauchliners ist schon des längeren bekannt, beispielsweise aus der DE 10 2010 023 764 A1. Der Schichtaufbau und die Bestandteile der Schichten sind weiter oben zudem genauer beschrieben.

Die besagte Schlauchaußenfolie 2 weist vorliegend den folgenden Schichtaufbau auf (s. Fig. 2):
- Schicht 2a: thermoplastisches Olefin-Homo- oder Copolymer (hier auch abgekürzt mit PE) mit silbrigfarbenen Pigmenten;
- Schicht 2b: Haftvermittler (HV) mit UV-Absorber;
- Schicht 2c: Polyamid (PA);
- Schicht 2d: Haftvermittler (HV) mit UV-Absorber;
- Schicht 2e (diese vorzugsweise angrenzend an das Harz-Trägersystem 3): thermoplastisches Olefin-Homo- oder Copolymer (PE) mit silbrigfarbenen Pigmenten.

Beispielhafte alternative Schichtaufbauten (z.B. Polyamidschicht / HV mit UV-Absorber / PE mit silbrigfarbenen Pigmenten / PE mit silbrigfarbenen Pigmenten / PE mit silbrigfarbenen Pigmenten (letztere Schicht vorzugsweise angrenzend an das Harz-Trägersystem 3) sind weiter oben und auch weiter unten (s. Beispiele) angeführt.

In der Fig. 3 ist der Einlegeschlauch 1 in ein zu sanierendes Kanalrohr K eingezogen im Querschnitt dargestellt, wobei zwischen Rohrwand des Kanalrohrs K und dem Einlegeschlauch 1 ein sog. Preliner 8 vorgesehen ist, der aus dem Stand der Technik bekannt ist. Er dient zum mechanischen Schutz des Einlegeschlauches 1 und zur Reibungsreduzierung beim Einziehen des Einlegeschlauches 1 in das Kanalrohr K.

Die Figuren 1-3 können gleichfalls als Ausführungsbeispiel mit zwei metallisierten Außenschichten herangezogen werden. Hierbei ist auf die Schichten 2a und 2e jeweils eine Metallisierung aufgebracht (und vorzugsweise kein silbrigfarbenes Pigment eingebracht). Die anderen Schichten 2b, 2c, 2e können bei diesem Ausführungsbeispiel gegenüber dem vorbeschriebenen Ausführungsbeispiel unverändert sein. Auch für den Fall einer metallisierten Außenschicht und mindestens einer (vorzugsweise anderen) Schicht mit silbrigfarbenen Pigmenten sind die Figuren 1-3 repräsentativ. Hierbei ist auf eine Außenschicht (entweder 2a oder 2e) eine Metallisierung aufgebracht und sind in eine (vorzugsweise andere) Schicht silbrigfarbene Pigmente eingebracht (beispielsweise in die Schicht 2e oder 2a).

### Untersuchte Ausführungsbeispiele:

Die nachfolgenden Beispiele und Vergleichsbeispiele dienen zur Erläuterung der Erfindung und sind nicht einschränkend auszulegen. Im Folgenden werden verschiedene Vergleichsbeispiele (Folien V1-V6) und erfindungsgemäße Beispielfolien (Folien B1-B4) vorgestellt, die hinsichtlich ihrer Reflexions- und Transmissionseigenschaften untersucht wurden.

### I. Verwendete Materialien

Das in vielen der nachfolgenden Beispielen verwendete LDPE ist Lupolen 2420 F von der Firma LyondellBasell Polymers. Auch das eingesetzte Lupolen 3010D ist ein LDPE von LyondellBasell Polymers.

Durethan C38 F von Lanxess ist ein Copolyamid mittlerer Viskosität.

Admer NF498E von Mitsui Chemicals ist ein mit Maleinsäureanhydridgruppen modifiziertes LDPE, besitzt eine große Adhäsion zu PET, EVOH und PA, ist sehr gut verarbeitbar sind und weist eine thermische Stabilität auf, die äquivalent zu gewöhnlichem PE ist.

Luvofilm 9679 ist ein Prozesshilfsmittel der Firma Lehmann & Voss & Co. KG, das in einem LDPE Masterbatch mit Fluorelastomer vorlag.

Eingesetzte silbrigfarbene Pigmente der Firma GRAFE Color Batch GmbH waren:
Grafe 13-08486: ca. 5 µm, "fein"; 30 Gew.-% Pigment
Grafe 13-08485: ca. 10 µm, "grob"; 30 Gew.-% Pigment
Grafe 13-08487: ca. 20 µm, "sehr grob"; 35 Gew.-% Pigment

Constab UVA 01490 LD der Firma CONSTAB Polyolefin Additives GmbH ist ein UV-Absorber Konzentrat zur Ausrüstung von Erzeugnissen auf Basis PE und dessen Copolymere, das UV-Barriereaufgaben zum Schutz des darunterliegenden Gutes erfüllen soll. Die Dichte beträgt 1,830 g/cm³ (nach ISO 1183) und 970 kg/m³ (nach ISO 60). Die jeweilig verwendeten Konzentrationsangaben bzgl. dieses UV-Absorbers sind in den nachfolgenden Tabellen wiedergegeben, wobei beispielsweise die Angabe "4%" bedeutet, dass 4 Gew.-% UV-Absorber neben beispielsweise 96 Gew.-% PE-LD vorhanden sind.

### II. Herstellung der Mehrschichtfolien

Die in den folgenden Tabellen aufgeführten Folien wurden durch Blasfolien-Extrusion hergestellt.

### III. Vermessung der Folien

Die Messung der Reflexion der Folien wurde bei den Wellenlängen 350 nm, 400 nm und 450 nm mit dem Gerät Specord 200 plus von Analytik Jena durchgeführt. Der Messbereich reichte von 200 bis 800 nm. Es war ein Messwinkel von 8° eingestellt.

Die Messung der Transmission erfolgte ebenso mit dem o.g. Gerät Specord 200 plus. Der Messbereich reichte ebenfalls von 200 bis 800 nm.

### IV. Vermessene Folien

Die Gewichtsprozentangaben beziehen sich jeweils auf das Gesamtgewicht der jeweiligen Schicht.

Die Beispiele B1-B4 sind erfindungsgemäße Mehrschichtfolien, während die Vergleichsfolien V1-V6 nicht erfindungsgemäß ausgebildet sind.

### Beispiel B1:

Silbrigfarbene Folie mit UV-Absorber; Farbbatch: Grafe 13-08485

| Schicht-Nummer | Zusammensetzung | Anteil in Schicht in % | Dicke in µm |
|---|---|---|---|
| 1 | • Luvofilm 9679 | • 0,5 | 75 |
| | • Lupolen 2420 F | • 79,5 | |
| | • Farbbatch silber | • 20 | |
| 2 | • Haftvermittler Mitsui Admer NF 498 E | • 96 | 12 |
| | • UV-Absorber Constab UVA 01490 LD | • 4 | |
| 3 | • Durethan C 38 F | • 100 | 26 |
| 4 | • Haftvermittler Mitsui Admer NF 498 E | • 96 | 12 |
| | • UV-Absorber Constab UVA 01490 LD | • 4 | |
| 5 | • Luvofilm 9679 | • 0,5 | 75 |
| | • Lupolen 2420 F | • 79,5 | |
| | • Farbbatch silber | • 20 | |
| | | | 200 µm |

### Beispiel B2:

Silbrigfarbene Folie mit UV-Absorber; Farbbatch silber: Grafe 13-08486

| Schicht-Nummer | Zusammensetzung | Anteil in Schicht in % | Dicke in µm |
|---|---|---|---|
| 1 | • Luvofilm 9679 | • 0,5 | 75 |
| | • Lupolen 2420 F | • 79,5 | |
| | • Farbbatch silber | • 20 | |
| 2 | • Haftvermittler Mitsui Admer NF 498 E | • 96 | 12 |
| | • UV-Absorber Constab UVA 01490 LD | • 4 | |
| 3 | • Durethan C 38 F | • 100 | 26 |
| 4 | • Haftvermittler Mitsui Admer NF 498 E | • 96 | 12 |
| | • UV-Absorber Constab UVA 01490 LD | • 4 | |
| 5 | • Luvofilm 9679 | • 0,5 | 75 |
| | • Lupolen 2420 F | • 79,5 | |
| | • Farbbatch silber | • 20 | |
| | | | 200 µm |

### Beispiel B3:

Silbrigfarbene Folie mit UV-Absorber; Farbbatch silber: Grafe 13-08487

| Schicht-Nummer | Zusammensetzung | Anteil in Schicht in % | Dicke in µm |
|---|---|---|---|
| 1 | • Luvofilm 9679 | • 0,5 | 75 |
| | • Lupolen 2420 F | • 84,5 | |
| | • Farbbatch silber | • 15 | |
| 2 | • Haftvermittler Mitsui Admer NF 498 E | • 96 | 12 |
| | • UV-Absorber Constab UVA 01490 LD | • 4 | |
| 3 | • Durethan C 38 F | • 100 | 26 |
| 4 | • Haftvermittler Mitsui Admer NF 498 E | • 96 | 12 |
| | • UV-Absorber Constab UVA 01490 LD | • 4 | |
| 5 | • Luvofilm 9679 | • 0,5 | 75 |
| | • Lupolen 2420 F | • 84,5 | |
| | • Farbbatch silber | • 15 | |
| | | | 200 µm |

### Beispiel B4:

Beidseitig metallisierte Folie mit UV-Absorber

| Schicht-Nummer | Zusammensetzung | Anteil in Schicht in % | Dicke in µm |
|---|---|---|---|
| 1 | • Luvofilm 9679 | • 0,5 | 75 |
| | • Lupolen 2420 F | • 99,5 | |
| 2 | • Haftvermittler Mitsui Admer NF 498 E | • 96 | 12 |
| | • UV-Absorber Constab UVA 01490 LD | • 4 | |
| 3 | • Durethan C 38 F | • 100 | 26 |
| 4 | • Haftvermittler Mitsui Admer NF 498 E | • 96 | 12 |
| | • UV-Absorber Constab UVA 01490 LD | • 4 | |
| 5 | • Luvofilm 9679 | • 0,5 | 75 |
| | • Lupolen 2420 F | • 99,5 | |
| | | | 200 µm |

### Vergleichsbeispiele:

Vergleichsbeispiele V1 bis V4: Wie die Beispiele B1 bis B4, nur ohne den UV-Absorber Constab UVA 01490 LD, also z.B. für

### Vergleichsbeispiel V1:

Farbbatch silber: Grafe 13-08485

| Schicht-Nummer | Zusammensetzung | Anteil in Schicht in % | Dicke in µm |
|---|---|---|---|
| 1 | • Luvofilm 9679 | • 0,5 | 75 |
| | • Lupolen 2420 F | • 79,5 | |
| | • Farbbatch silber | • 20 | |
| 2 | • Haftvermittler Mitsui Admer NF 498 E | • 100 | 12 |
| 3 | • Durethan C 38 F | • 100 | 26 |
| 4 | • Haftvermittler Mitsui Admer NF 498 E | • 100 | 12 |
| 5 | • Luvofilm 9679 | • 0,5 | 75 |
| | • Lupolen 2420 F | • 79,5 | |
| | • Farbbatch silber | • 20 | |
| | | | 200 µm |

### Vergleichsbeispiel V5:

Wie Beispiel 1, nur ohne UV-Absorber und ohne Farbbatch silber.

| Schicht-Nummer | Zusammensetzung | Anteil in Schicht in % | Dicke in µm |
|---|---|---|---|
| 1 | • Luvofilm 9679 | • 0,5 | 75 |
| | • Lupolen 2420 F | • 99,5 | |
| 2 | • Haftvermittler Mitsui Admer NF 498 E | • 100 | 12 |
| 3 | • Durethan C 38 F | • 100 | 26 |
| 4 | • Haftvermittler Mitsui Admer NF 498 E | • 100 | 12 |
| 5 | • Luvofilm 9679 | • 0,5 | 75 |
| | • Lupolen 2420 F | • 99,5 | |
| | | | 200 µm |

### Vergleichsbeispiel V6:

Hier wurde die 5-schichtige Folie aus dem Beispiel 1 der WO 2013/026568 A1 gemessen, deren Dicke 200 µm betrug. In der zur Außenumgebung gerichteten Außenschicht waren 1,5 Gew.-% Euthylenblau 69-2025 Granulat, in der anschließenden Schicht 6 Gew.-% Remafin Schwarz &E-AE (40% Ruß) und in der nach innen gerichteten Außenschicht 20 Gew.-% Remafin Weiss RCL enthalten.

### V. Ergebnisse

Die folgende Tabelle gibt eine Übersicht über die gemessene Reflexion bei den Wellenlängen 350 nm, 400 nm, 450 nm für die Beispielfolien B1-B4 und die Vergleichsfolien V1-V6. Bei der beidseitig metallisierten Folie des Beispiels B4 sind die Messwerte von beiden Folienseiten angegeben.

| Bezeichnung | Reflexion in % bei 200 nm | Reflexion in % bei 350 nm | Reflexion in % bei 400 nm | Reflexion in % bei 450 nm | Reflexion in % bei 600 nm |
|---|---|---|---|---|---|
| B1 | 49,3 | 33,6 | 57,1 | 58,7 | 56,7 |
| B2 | 45,1 | 30,3 | 55,1 | 55,8 | 50,0 |
| B3 | 58,9 | 63,4 | 58,6 | 56,4 | 57,5 |
| B4 | 93,6/93,4 | 93,9/93,7 | 93,3/93,4 | 92,9/93,1 | 93,0/93,0 |
| V1 | Wie B1 | | | | |
| V2 | Wie B2 | | | | |
| V3 | Wie B3 | | | | |
| V4 | Wie B4 | | | | |
| V5 | 1,7 | 3,2 | 3,4 | 4,0 | 4,1 |
| V6 | 7,2 | 9,3 | 11,4 | 14,3 | 15,6 |

Die folgende Tabelle gibt eine Übersicht über die gemessene Transmission bei den Wellenlängen 350 nm, 400 nm, 450 nm für die Beispielfolien B1-B4 und die Vergleichsfolien V1-V6:

| Bezeichnung | Transmissi on in % bei 200 nm | Transmissi on in % bei 350 nm | Transmissi on in % bei 400 nm | Transmissi on in % bei 450 nm | Transmissi on in % bei 600 nm |
|---|---|---|---|---|---|
| B1 | 0,014 | 0,015 | 0,016 | 0,014 | 0,013 |
| B2 | 0,009 | 0,008 | 0,007 | 0,009 | 0,008 |
| B3 | 0,020 | 0,020 | 0,021 | 0,025 | 0,024 |
| B4 | 0,007 | 0,007 | 0,007 | 0,007 | 0,007 |
| V1 | 0,57 | 0,55 | 0,65 | 0,66 | 0,66 |
| V2 | 0,33 | 0,31 | 0,42 | 0,39 | 0,40 |
| V3 | 1,11 | 1,00 | 1,00 | 1,10 | 1,12 |
| V4 | 0,09 | 0,09 | 0,08 | 0,08 | 0,09 |
| V5 | 83,91 | 86,42 | 92,94 | 93,22 | 94,12 |
| V6 | 0,82 | 0,72 | 0,69 | 0,63 | 0,65 |

Mit *E*_{λ}= - log₁₀*T* kann aus den obigen Transmissionswerten die Extinktion (optische Dichte) bei den jeweiligen Wellenlängen berechnet werden. Bei den Beispielen B1 bis B4 resultieren hierbei Extinktionswerte von 1,60 (Transmission *T* = 0,025) bis 2,16 (Transmission *T* = 0,007).

### VI. Auswertung und Interpretation

Eine hohe Reflexion von sowohl sichtbarem Licht als auch von UV-Strahlung wird bei den Folien aus den Beispielen B1 bis B3 und den Vergleichsbeispielen V1 bis V3 zum einen durch Zugabe eines Farbbatches mit silbrigfarbenen Metallpigmenten in die Folien, bevorzugt in die beiden Außenschichten erreicht. Die verwendeten silbrigfarbenen Farbbatche enthielten Aluminium-Metallpigmente, deren Größe sich je nach Farbbatch unterschied. Bei den Beispielen B2 und dem Vergleichsbeispiel V2 wiesen die Metallpigmente eine mittlere Größe von etwa 5 µm auf und werden als "fein" bezeichnet. Bei den Beispielen B1 und dem Vergleichsbeispiel V1 wiesen die Metallpigmente eine mittlere Größe von etwa 10 µm auf und werden als "grob" bezeichnet. Bei den Beispielen B3 und dem Vergleichsbeispiel V3 wiesen die Metallpigmente eine mittlere Größe von etwa 20 µm auf und werden als "sehr grob" bezeichnet.

Es stellte sich im Rahmen dieser Erfindung heraus, dass je feiner die Metallpigmente im verwendeten silbrigen Farbbatch waren, ein abnehmendes Reflexionsvermögen bei den Folien gegenüber sichtbarem Licht und insbesondere gegenüber UV-Licht (z.B. bei Wellenlänge 350 nm) beobachtet wurde. So lag die Reflexion bei dem Beispiel B2 und dem Vergleichsbeispiel V2 im UV-Bereich von 350 nm bei 30,3%.

Der Einsatz eines Farbbatches mit etwas gröberen Metallpigmenten (B1 und V1) führte zu einer Reflexion bei 350 nm von 33,6%. Bei Verwendung eines Farbbatches mit noch gröberen Metallpigmenten (Beispiel B3 und Vergleichsbeispiel V3) wurde im Rahmen dieser Messreihe mit 63,4% die höchste Reflexion gefunden.

Überraschenderweise hat die Größe der im Farbbatch enthaltenen Metallpigmente mit zunehmender Wellenlänge - insbesondere ab dem Bereich der Wellenlänge des sichtbaren Lichts (400 nm) - nur noch einen geringen Einfluss auf das Reflexionsvermögen der Folie. So finden sich bei B1 bis B3 und V1 bis V3 bei einer Wellenlänge von 400 nm und 450 nm mit Werten für die Reflexion im Bereich 55,1 bis 58,7% fast identische Werte. Das sind Werte, die für eine sehr gute Reflexion sprechen. Auch die Reflektionswerte bei 600 nm liegen mit 56,7 % (B1 und V1), 50,0 % (B2 und V2) und 57,5 % (B3 und V3) in diesem Bereich.

Eine noch höhere Reflexion von sowohl sichtbarem Licht als auch von UV-Strahlung wurde bei der Folie aus dem Beispiel B4 und dem Vergleichsbeispiel V4 zum anderen dadurch erreicht, dass die Folie auf beiden Seiten metallisiert wurde, zum Beispiel durch Bedampfung mit Aluminium. Die Arten der Metallisierung sind dem Fachmann bekannt.

Mit einer Metallisierung wird demnach mit Abstand das höchste Reflexionsvermögen der Folie realisiert, das bei der hier verwendeten Aluminium-Bedampfung der Folie nahezu unabhängig von der Wellenlänge des UV- und sichtbaren Lichts ist. So werden bei B4 und V4 bei allen gemessenen Wellenlängen 200 nm, 350 nm, 400 nm, 450 nm und 600 nm Reflexionswerte von weit über 90% erzielt. Aufgrund des Spiegel-Effekts wird die UV- und Lichtstrahlung nahezu vollständig reflektiert.

Die transparente Folie aus dem Vergleichsbeispiel V5, die weder ein Metallpigment enthält noch metallisiert ist, hat demgegenüber nur ein geringes Reflexionsvermögen, wie die Werte im Bereich 1,7 bis 4,0% bei den Wellenlängen 200, 350, 400, 450 und 600 nm zeigen.

Überraschenderweise wurde bei der Folie aus Vergleichsbeispiel V6 eine deutlich geringere Reflexion ermittelt, als in dem Patent WO2013/026568 beschrieben. Der Einsatz einer weißen Schicht, bei einer darunter liegenden schwarzen Schicht, führte lediglich zu Reflexionswerten zwischen 7,2% (200 nm) und 15,6% (600 nm).

Dies zeigt, dass ein hohes Reflexionsvermögen einer Folie bevorzugt und idealerweise durch den Einsatz von silbrigfarbenen Metallpigmenten oder durch Metallisierung erhalten wird.

Trotzdem hat sich gezeigt, dass die UV- und Lichtschutzwirkung von Folien, die entweder silbrigfarbene Metallpigmente enthalten oder metallisiert sind und daher eine hohe Reflexion aufweisen, für deren Einsatz etwa als Außenfolien für Schlauchliner oftmals immer noch nicht optimal ist. Dies belegen die Vergleichsbeispiele V1 bis V5 mit Blick auf die Werte für die Transmission bei den Wellenlängen 350 nm, 400 nm und 450 nm. Die geringsten Transmissionswerte werden mit 0,08 bis 0,09% bei der beidseitig metallisierten Folie aus Vergleichsbeispiel V4 gefunden.

Noch höher liegen die Transmissionswerte bei den Folien, die mit Hilfe von silbrigfarbenen Farbbatchen eingefärbt wurden. Trotz hoher Konzentration an Silber-Farbbatch in beiden Außenschichten der Folien zeigen die Folien aus den Vergleichsbeispielen V1, V2 und V3 Transmissionswerte im Bereich 0,31% (V2 bei 350 nm) bis 1,10% (V3 bei 450 nm).

Zusätzlich gilt, dass je gröber die in die Folie eingebrachten Metallpigmente sind, umso höher deren Transmission ist. Dadurch besteht bei längerer Einwirkung von Licht - insbesondere von UV-Licht im Bereich 350 bis 380 nm - immer die Gefahr, dass bei einem Schlauchliner das unter der UV- und Lichtschutzaußenfolie befindliche reaktive Harz durch Aktivierung des Photoinitiators vorzeitig photochemisch ausgehärtet werden kann, womit der Schlauchliner unbrauchbar wird.

Somit zeichnen sich bisher im Stand der Technik verwendete Außenfolien, die entweder Metallpigmente enthalten oder metallisiert sind, zwar durch sehr hohe Werte für die Licht-Reflexion aus. Sie weisen aber immer noch zu hohe Transmissionswerte auf, d.h. der Anteil der durch die Folie dringenden UV- und Lichtstrahlung ist für viele Anwendungsfälle immer noch zu hoch.

Wie den Beispielen B1 bis B4 entnommen werden kann, wird die Transmission erheblich verringert, wenn der Folie noch in wenigstens einer Schicht, bevorzugt aber in zwei oder mehr Schichten, ein UV-Absorber zugegeben wird. So wird die Transmission von UV-Strahlung (350 nm) um einen Faktor von 50 verringert, wie der Vergleich von Beispiel B3 mit Vergleichsbeispiel V3 zeigt. Hier konnte die Transmission durch Zugabe von UV-Absorber von 1,00% auf 0,02% gesenkt werden.

Gleiches gilt für die Verringerung der Transmission von sichtbarem Licht bei Wellenlängen von 400 nm und 450 nm. Hier ergab sich eine Verringerung der Transmission um einen Faktor von über 40, wenn die Folien mit UV-Absorber versetzt waren. Selbst bei den metallisierten Folien aus dem Vergleichsbeispiel V4, die bereits ohnehin schon geringe Transmissionswerte haben, kann deren Transmission im UV- und Lichtbereich nochmals um mehr als einen Faktor 10 verringert werden, was das Beispiel B4 belegt.

Vergleichsbeispiel V5 zeigt, dass eine transparente Folie ohne UV-Absorber UV- und sichtbares Licht nahezu ungehindert durchlässt. Die Transmissionswerte liegen weit über 80%.

Die im Stand der Technik beschriebene Vergleichsfolie V6 ist in Bezug auf UV- und Lichttransmission ebenfalls noch ungenügend. Im Wellenlängenbereich von 350 nm bis 450 nm lag die Transmission zwischen 0,63 und 0,72%. Hier lagen die Werte für die Transmission in der Größenordnung einer silbrigen Folie mit Metallpigmenten ohne UV-Absorber (V1 bis V3).

Die Erfindung ist nicht auf die beschriebenen Ausführungsbeispiele beschränkt.

## Patentansprüche

1. Schlauchförmige Außenfolie (2) für einen Einlegeschlauch (1) eines Rohrsanierungssystems, **dadurch gekennzeichnet, dass** einerseits
- in mindestens zwei Schichten (2a, 2e) der Außenfolie (2) silbrigfarbene Pigmente eingebracht sind, oder
- jeweils eine Metallisierung auf beide Außenschichten der Außenfolie (2) aufgebracht ist, oder
- in mindestens eine Schicht der Außenfolie (2) silbrigfarbene Pigmente eingebracht sind und auf einer Außenschicht der Außenfolie (2) eine Metallisierung aufgebracht ist,
und dass andererseits in mindestens einer oder mehreren Schichten (2b, 2d) der Außenfolie (2) mindestens ein UV-Absorber eingebracht ist,
so dass in Abstimmung mit den Schichtdicken und der Gesamtdicke der Außenfolie (2) die gesamte Außenfolie (2) für UV- und sichtbares Licht in einem Wellenlängenbereich von 200 bis 800 nm zu weniger als 0,1% durchlässig ist und für einen Betrachter als opak, undurchsichtig und blickdicht wahrgenommen wird, und die UV- und sichtbare Strahlung in einem Wellenlängenbereich von 200 bis 800 nm, insbesondere ab 300 nm, zu mehr als 20% reflektiert wird.

2. Außenfolie nach Anspruch 1, **dadurch gekennzeichnet, dass**
- durch den Zusatz von silbrigfarbenen Pigmenten und/oder durch besagte Metallisierung einerseits und durch den mindestens einen UV-Absorber andererseits die gesamte Außenfolie (2) für UV- und sichtbares Licht zumindest in einem Wellenlängenbereich von 200 bis 800 nm zu weniger als 0,075%, vorzugsweise zu weniger als 0,05%, besonders bevorzugt zu weniger als 0,025% durchlässig ist, und/oder
- dass durch den Zusatz von silbrigfarbenen Pigmenten und/oder durch besagte Metallisierung sichtbare Strahlung zumindest in einem Wellenlängenbereich von 200 bis 800 nm, insbesondere ab 300 nm, zu mehr als 20%, vorzugsweise mehr als 30%, am meisten bevorzugt zu mehr als 40%, reflektiert wird.

3. Außenfolie nach einem oder mehreren der vorhergehenden Ansprüche, **dadurch gekennzeichnet, dass** eine oder zwei der silbrigfarbene Pigmente enthaltenden Schichten (2a, 2e) Außenschichten (2a, 2e) der Außenfolie (2) sind.

4. Außenfolie nach einem oder mehreren der vorhergehenden Ansprüche, **dadurch gekennzeichnet, dass** die silbrigfarbenen Pigmente, die vorzugsweise zusammen mit mindestens einem thermoplastischen Olefin-Homo- oder Copolymer, gegebenenfalls modifiziert, in der oder den besagten Schichten (2a, 2e) enthalten sind, ausgewählt sind aus der Gruppe umfassend:
- Metallische Pigmente, vorzugsweise vom Leafing-Typ, ausgenommen solche aus Zink oder Zinn;
- Metalleffektpigmente, basierend auf z.B. Aluminium, Silber, Nickel, Chrom, Quecksilber, Amalgam, oder Legierungen besagter Metalle, ausgenommen solche basierend auf Zink oder Zinn;
- Perlglanzpigmente;
- Metallisierte Träger, z.B. metallisierte Perlglanzpigmente (Glimmerpigmente), beispielsweise durch Aluminium Bedampfung;
- Mischungen aus den obigen Pigmenten.

5. Außenfolie nach einem oder mehreren der vorhergehenden Ansprüche, **dadurch gekennzeichnet, dass**
- die mittleren Pigmentgrößen der silbrigfarbenen Pigmente im Bereich von 0,1 µm bis 100 µm liegen, vorzugsweise im Bereich von 1 µm bis 75 µm, besonders bevorzugt im Bereich von 5 µm bis 50 µm, und/oder
- dass die Pigmente in mindestens einer silbrigfarbenen Schicht in einer Konzentration von 0,01 bis 50 Gew.-%, vorzugsweise von 0,1 bis 50 Gew.-%, bevorzugt von 1 bis 30 Gew.-%, enthalten sind.

6. Außenfolie nach einem oder mehreren der vorhergehenden Ansprüche, **dadurch gekennzeichnet, dass** in der zum Kanal weisenden Außenschicht (2a) der Außenfolie (2) neben den silbrigfarbenen Farbstoffen oder Farbpigmenten auch andersfarbige Farbstoffe und Farbpigmente eingebracht sind.

7. Außenfolie nach einem oder mehreren der vorhergehenden Ansprüche, **dadurch gekennzeichnet, dass** durch die Zugabe des mindestens einen UV-Absorbers in mindestens eine Schicht (2b, 2d) die Strahlung in der gesamten Außenfolie (2) in einem Wellenlängenbereich von 200 bis 450 nm, insbesondere von 250 bis 400 nm, zu mehr als 95%, vorzugsweise zu mehr als 98%, besonders bevorzugt zu mehr als 99,5% absorbiert wird.

8. Außenfolie nach einem oder mehreren der vorhergehenden Ansprüche, **dadurch gekennzeichnet, dass** der besagte mindestens eine UV-Absorber, der in der besagten mindestens einen Schicht (2b, 2d) vorzugsweise in einer Konzentration von 0,01 bis 20 Gew.-%, bevorzugt von 0,1 bis 10 Gew.-%, am meisten bevorzugt von 0,5 bis 5 Gew.-%, enthalten ist, ausgewählt ist aus der Gruppe, die folgende Verbindungen umfasst:
- Anorganische Verbindungen, wie z.B. Metalloxide, einschließlich Übergangsmetalloxide, wie z.B. Titanoxid, Eisenoxid und Zinkoxid, sowie Metalloxidhydrate, einschließlich Übergangsmetalloxidhydrate;
- Organische Verbindungen, wie z.B. Benzotriazole, Triazine, Benzophenone und Cyanoacrylate;
- Derivate der vorgenannten Verbindungen;
- Mischungen aus den vorgenannten Verbindungen.

9. Außenfolie nach einem oder mehreren der vorhergehenden Ansprüche, **dadurch gekennzeichnet, dass** die mindestens eine Schicht (2b, 2d), in die der mindestens eine UV-Absorber eingebracht ist,
- eine Haftvermittlerschicht (2b, 2d) der Außenfolie (2) ist, und/oder
- mindestens ein thermoplastisches Olefin-Homo- oder Copolymer, gegebenenfalls modifiziert, enthält, wobei in dieser Schicht auch besagte silbrigfarbene Pigmente enthalten sein können, und/oder
- eine innenliegende Schicht (2b, 2d) der Außenfolie (2) ist.

10. Außenfolie nach einem oder mehreren der vorhergehenden Ansprüche, **dadurch gekennzeichnet, dass** mindestens ein besagter UV-Absorber in zwei Schichten (2b, 2d) eingebracht ist, vorzugsweise jeweils in eine innenliegende Schicht (2b, 2d) der Außenfolie (2) und hierbei vorzugsweise jeweils in eine innenseitig an jeweils eine der Außenschichten (2a, 2e) der Außenfolie (2) angrenzende Schicht (2b, 2d).

11. Außenfolie nach einem oder mehreren der vorhergehenden Ansprüche, **dadurch gekennzeichnet, dass** eine oder beide ihrer Außenschichten (2a, 2e) enthalten:
- mindestens ein thermoplastisches Olefin-Homo- oder Copolymer, gegebenenfalls modifiziert, und/oder
- mindestens ein Polyamid, gegebenenfalls modifiziert, und/oder
- mindestens ein Thermoplastisches Elastomer (TPE), insbesondere TPU, gegebenenfalls modifiziert.

12. Außenfolie nach einem oder mehreren der vorhergehenden Ansprüche, **dadurch gekennzeichnet, dass** mindestens eine innenliegende Barriereschicht gegen den Durchtritt von Gasen und/oder chemischen Substanzen vorgesehen ist, wobei die Barriereschicht vorzugsweise Ethylenvinylalkohol (EVOH) oder Polyamid (PA) oder Cyclo-Olefin-Copolymer (COC) oder eine Kombination von diesen enthält, bevorzugt jeweils mit bis zu 100 Gew.-% aus diesen Verbindungen.

13. Außenfolie nach einem oder mehreren der vorhergehenden Ansprüche, **dadurch gekennzeichnet, dass** die Gesamtdicke der Außenfolie zwischen 10 µm und 1000 µm, vorzugsweise zwischen 20 µm und 500 µm, besonders bevorzugt zwischen 30 µm und 400 µm, beträgt.

14. Außenfolie nach einem oder mehreren der vorhergehenden Ansprüche, **dadurch gekennzeichnet, dass** sie einerseits mindestens zwei, vorzugsweise genau zwei, Schichten (2a, 2e) mit besagten silbrigfarbenen Pigmenten oder die zwei besagten metallisierten Außenschichten und andererseits mindestens zwei, vorzugsweise genau zwei, Schichten (2b, 2d) mit besagtem mindestens einen UV-Absorber aufweist, wobei der Schichtaufbau der Außenfolie (2) bezüglich der genannten Schichten (2a, 2b, 2d, 2e) symmetrisch sein kann und hierbei die Schichten (2b, 2d) mit dem jeweils mindestens einen UV-Absorber zwischen den Schichten (2a, 2e) mit den silbrigfarbenen Pigmenten bzw. den metallisierten Außenschichten angeordnet sind.

15. Außenfolie nach einem oder mehreren der vorhergehenden Ansprüche, **dadurch gekennzeichnet, dass** die Außenfolie (2) einen Schichtaufbau aus der folgenden Gruppe aufweist, wobei die Schicht (a) zur Rohrwand und die Schicht (e) zur Rohrachse zeigend vorgesehen ist:
1)
Schicht (a): PA oder PA-Mischung;
Schicht (b) Haftvermittler mit UV-Absorber;
Schicht (c): PE oder PE-Mischung mit silbrigfarbenen Pigmenten;
Schicht (d): PE oder PE-Mischung mit silbrigfarbenen Pigmenten;
Schicht (e): PE oder PE-Mischung mit silbrigfarbenen Pigmenten;
mit ggf. weiteren innen- und/oder außenliegenden Schichten;
2)
Schicht (a): PA oder PA-Mischung;
Schicht (b): PA oder PA-Mischung;
Schicht (c): Haftvermittler mit UV-Absorber;
Schicht (d): PE oder PE-Mischung mit silbrigfarbenen Pigmenten;
Schicht (e): PE oder PE-Mischung mit silbrigfarbenen Pigmenten;
mit ggf. weiteren innen- und/oder außenliegenden Schichten;
3)
Schicht (a): PE oder PE-Mischung mit silbrigfarbenen Pigmenten;
Schicht (b): Haftvermittler mit UV-Absorber;
Schicht (c): PA oder PA-Mischung;
Schicht (d): Haftvermittler mit UV-Absorber;
Schicht (e) PE oder PE-Mischung mit silbrigfarbenen Pigmenten;
mit ggf. weiteren innen- und/oder außenliegenden Schichten;
4)
Schicht (a): PA oder PA-Mischung;
Schicht (b): Haftvermittler mit UV-Absorber;
Schicht (c): PE oder PE-Mischung mit silbrigfarbenen Pigmenten;
Schicht (d): Haftvermittler mit UV-Absorber;
Schicht (e): PE oder PE-Mischung mit silbrigfarbenen Pigmenten;
mit ggf. weiteren innen- und/oder außenliegenden Schichten;
wobei jeweils optional zusätzlich mindestens ein UV-Absorber in mindestens einer ein PE oder eine PE-Mischung enthaltenden innenliegenden Schicht zugesetzt sein kann.

16. Verbund mit einer Außenfolie nach einem oder mehreren der vorhergehenden Ansprüche, **dadurch gekennzeichnet, dass** die besagte Außenfolie (2) mit mindestens einer weiteren Folie oder einem Woven- oder Nonwoven-Material und insbesondere mit einem für Harz und Flüssigkeiten saugfähigen Material kaschiert ist.

17. Einlegeschlauch für die Rohrsanierung, insbesondere die grabenlose Kanalsanierung, umfassend eine schlauchförmige Außenfolie (2) nach einem oder mehreren der vorhergehenden Ansprüche, mit einem von der Außenfolie (2) umgebenen schlauchförmigen Trägersystem (3) mit aushärtbarem Harz und mit einer von dem Trägersystem (3) umgebenen schlauchförmigen, für UV-Strahlung durchlässigen Innenfolie (4).

18. Verwendung eines Einlegeschlauchs (1) nach dem vorhergehenden Anspruch zur Sanierung eines Rohres, vorzugsweise einem unterirdisch verlegten Rohr, insbesondere einem Kanalrohr (K).

## Claims

1. A tubular outer film (2) for a hose liner (1) of a pipe renovation system, **characterized in that**, as one feature,
- silver-colored pigments are introduced into at least two layers (2a, 2e) of the outer film (2), or
- a metallization is applied to each of the two outer layers of the outer film (2), or
- silver-colored pigments are introduced into at least one layer of the outer film (2) and a metallization is applied to an outer layer of the outer film (2),
and that, as another feature, at least one UV absorber is embedded in at least one or more layers (2b, 2d) of the outer film (2),
so that by coordinating the layer thicknesses and the overall thickness of the outer film (2), the entire outer film (2) is less than 0.1% permeable to UV and visible light in a wavelength range from 200 to 800 nm, and is perceived by an observer as opaque, non-transparent, and visually impermeable, and the UV and visible radiation in a range from 200 to 800 nm, particularly 300 nm and above, is reflected at a rate of more than 20%.

2. The outer film according to claim 1, **characterized in that**
- by means of adding silver-colored pigments and/or by means of said metallization and by means of the at least one UV absorber, the entire outer film (2) is permeable to UV and visible light at least in a wavelength range from 200 to 800 nm less than 0,075%, preferably less than 0,05%, particularly preferably less than 0,025%, and/or
- that by means of adding silver-colored pigments and/or by means of said metallization, visible radiation at least in a wavelength range from 200 to 800 nm, particularly at 300 nm and above, is reflected at a rate of more than 20%, preferably a rate of more than 30%, most preferably at a rate of more than 40%.

3. The outer film according to any one or several of the preceding claims, **characterized in that** one or two of the layers (2a, 2e) comprising silver-colored pigments are outer layers (2a, 2e) of the outer film (2).

4. The outer film according to any one or several of the preceding claims, **characterized in that** the silver-colored pigments, preferably together with at least one thermoplastic olefin homo- or co-polymer, optionally modified, present in said layer or layers (2a, 2e) are selected form the group comprising:
- metal pigments, preferably of the leafing type, excepting those made of zinc or tin;
- metal-effect pigments, based on aluminum, silver, nickel, chromium, mercury, amalgam, or alloys of said metals, excepting those based on zinc or tin;
- pearlescent pigments;
- metalized support substrates, such as metalized pearlescent pigments (glimmer pigments), for example by aluminum vaporization;
- mixtures of the above pigments.

5. The outer film according to any one or several of the preceding claims, **characterized in that**
- the average pigment sizes of the silver-colored pigments lie in the range from 0.1 µm to 100 µm, preferably in the range from 1 µm to 75 µm, particularly preferably in the range from 5 µm to 50 µm, and/or
- that the pigments in at least one silver-colored layer are present at a concentration from 0.01 to 50 % by weight, preferably from 0.1 to 50 % by weight, preferably from 1 to 30 % by weight.

6. The outer film according to any one or several of the preceding claims, **characterized in that** differently colored dyes and pigments are embedded in the outer layer (2a) of the outer film (2) facing toward the pipe in addition to the silver-colored dyes or pigments.

7. The outer film according to any one or several of the preceding claims, **characterized in that** by adding the at least one UV absorber to at least one layer (2b, 2d), radiation is absorbed in the entire outer film (2) in a wavelength range from 200 to 450 nm, particularly from 250 to 400 nm, at a rate of more than 95%, preferably at a rate of more than 98%, particularly preferably at a rate of more than 99.5%.

8. The outer film according to any one or several of the preceding claims, **characterized in that** said at least one UV absorber, which is present in said at least one layer (2b, 2d) at a concentration preferably from 0.01% to 20% by weight, preferably from 0.1% to 10% by weight, most preferably from 0.5% to 5% by weight, is selected from the group comprising the following compounds:
- inorganic compounds, such as metal oxides, including transition metal oxides, such as titanium oxide, iron oxide, and zinc oxide, as well as metal oxide hydrates, including transition metal oxide hydrates;
- organic compounds, such as benzotriazols, triazines, benzophenones, and cyanoacrylates;
- derivatives of the above compounds;
- mixtures of the above compounds.

9. The outer film according to any one or several of the preceding claims, **characterized in that** the at least one layer (2b, 2d) into which the at least one UV absorber is introduced,
- is a bonding agent layer (2b, 2d) of the outer film (2), and/or
- comprises at least one thermoplastic olefin homo- or co-polymer, optionally modified, wherein said silver-colored pigments can also be present in said layer, and/or
- is an inner layer (2b, 2d) of the outer film (2).

10. The outer film according to any one or several of the preceding claims, **characterized in that** at least one said UV absorber is introduced into two layers (2b, 2d), preferably each into one inner layer (2b, 2d) of the outer film (2), and herein preferably each into a layer (2b, 2d) adjacent to the inner side of one of the outer layers (2a, 2e) of the outer film (2).

11. The outer film according to any one or several of the preceding claims, **characterized in that** one or both of the outer layers (2a, 2e) thereof comprise:
- at least one thermoplastic olefin homo- or co-polymer, optionally modified, and/or
- at least one polyamide, optionally modified, and/or
- at least one thermoplastic elastomer (TPE), particularly TPU, optionally modified.

12. The outer film according to any one or several of the preceding claims, **characterized in that** at least one inner barrier layer against penetration by gases and/or chemical substances is provided, wherein the barrier layer preferably comprises ethylene vinyl alcohol (EVOH) or polyamide (PA) or cyclo-olefin-copolymer (COC) or a combination thereof, preferably having up to 100% by weight of said compounds in each case.

13. The outer film according to any one or several of the preceding claims, **characterized in that** the overall thickness of the outer film is between 10 µm and 1000 µm, preferably between 20 µm and 500 µm, particularly preferably between 30 µm and 400 µm.

14. The outer film according to any one or several of the preceding claims, **characterized in that** said film comprises at least two, preferably exactly two, layers (2a, 2e) having said silver-colored pigments or said two metalized outer layers, as well as at least two, preferably exactly two, layers (2b, 2d) having said at least one UV absorber, wherein the layer structure of the outer film (2) with respect to said layers (2a, 2b, 2d, 2e) can be symmetrical and herein the layers (2b, 2d) having the at least one UV absorber are disposed between the layers (2a, 2e) having the silver-colored pigments or the metalized outer layers.

15. The outer film according to any one or several of the preceding claims, **characterized in that** the outer film (2) comprises a layer structure from the following groups, wherein the layer (a) faces toward the pipe wall and the layer (e) faces toward the pipe axis:
1)
Layer (a): PA or PA mixture;
Layer (b): bonding agent having UV absorber;
Layer (c): PE or PE mixture having silver-colored pigments;
Layer (d): PE or PE mixture having silver-colored pigments;
Layer (e): PE or PE mixture having silver-colored pigments;
optionally having further inner and/or outer layers;
2)
Layer (a): PA or PA mixture;
Layer (b): PA or PA mixture;
Layer (c): bonding agent having UV absorber;
Layer (d): PE or PE mixture having silver-colored pigments;
Layer (e): PE or PE mixture having silver-colored pigments;
optionally having further inner and/or outer layers;
3)
Layer (a): PE or PE mixture having silver-colored pigments;
Layer (b): bonding agent having UV absorber;
Layer (c): PA or PA mixture;
Layer (d): bonding agent having UV absorber;
Layer (e): PE or PE mixture having silver-colored pigments;
optionally having further inner and/or outer layers;
4)
Layer (a): PA or PA mixture;
Layer (b): bonding agent having UV absorber;
Layer (c): PE or PE mixture having silver-colored pigments;
Layer (d): bonding agent having UV absorber;
Layer (e): PE or PE mixture having silver-colored pigments;
optionally having further inner and/or outer layers; wherein optionally additionally, in each case, at least one UV absorber can be added to at least one inner layer comprising PE or a PE mixture.

16. A composite having an outer film according to any one or several of the preceding claims, **characterized in that** said outer film (2) is laminated with at least one further film or one woven or non-woven material, and particularly with a material for absorbing resin and liquids.

17. A hose liner for pipe renovation, particularly non-disruptive pipe renovation, comprising a tubular outer film (2) according to any one or several of the preceding claims, having a tubular carrier system (3) enclosed by the outer film (2) and comprising curable resin, and having an inner film (4) enclosed by the carrier system (3) and permeable to UV radiation.

18. The use of a hose liner (1) according to the preceding claim for renovating a pipe, preferably an underground pipe, particularly a sewer pipe (K).

## Revendications

1. Feuille extérieure tubulaire (2) pour un tuyau de chemisage (1) d'un système de réhabilitation de conduits, **caractérisée en ce que**, d'une part,
- des pigments de couleur argentée sont incorporés dans au moins deux couches (2a, 2e) de la feuille extérieure (2), ou
- une métallisation est respectivement appliquée sur les deux couches extérieures de la feuille extérieure (2), ou
- des pigments de couleur argentée sont incorporés dans au moins une couche de la feuille extérieure (2) et une métallisation est appliquée sur une couche extérieure de la feuille extérieure (2),
et que, d'autre part, au moins un absorbeur UV est incorporé dans au moins une ou plusieurs couches (2b, 2d) de la feuille extérieure (2), de sorte que, en accord avec les épaisseurs de couches et l'épaisseur totale de la feuille extérieure (2), la feuille extérieure (2) intégrale soit translucide à moins de 0,1% pour la lumière UV et la lumière visible dans une gamme de longueurs d'onde de 200 à 800 nm et soit perçue en tant qu'opaque, non-translucide et imperméable à la vue pour un observateur, et le rayonnement UV et visible dans une gamme de longueurs d'ondes de 200 à 800 nm, en particulier à partir de 300 nm, soit réfléchi à plus de 20%.

2. Feuille extérieure selon la revendication 1, **caractérisée en ce que**
- d'une part, en raison de l'addition de pigments de couleur argentée et/ou de ladite métallisation et, d'autre part, en raison de l'au moins un absorbeur UV, la feuille extérieure (2) intégrale est translucide pour la lumière UV et visible au moins dans une gamme de longueurs d'ondes de 200 à 800 nm à moins de 0,075%, de préférence à moins de 0,05%, de manière particulièrement préférée à moins de 0,025%, et/ou
- en raison de l'addition de pigments de couleur argentée et/ou de ladite métallisation, le rayonnement visible au moins dans une gamme de longueurs d'ondes de 200 à 800 nm, en particulier à partir de 300 nm, est réfléchi à plus de 20%, de préférence à plus de 30%, de manière la plus préférée, à plus de 40%.

3. Feuille extérieure selon l'une ou plusieurs des revendications précédentes, caractérisée en ce qu'une ou deux des couches (2a, 2e) contenant les pigments de couleur argentée sont des couches extérieures (2a, 2e) de la feuille extérieure (2).

4. Feuille extérieure selon l'une ou plusieurs des revendications précédentes, **caractérisée en ce que** les pigments de couleur argentée, qui sont contenus dans ladite ou lesdites couche(s) (2a, 2e) de préférence avec au moins un homopolymère ou un copolymère d'oléfine thermoplastique, le cas échéant modifié, sont sélectionnés dans le groupe contenant :
- pigments métalliques, de préférence de type à feuilletage, à l'exception de ceux en zinc ou étain ;
- pigments à effet métallique, basés par exemple sur l'aluminium, l'argent, le nickel, le chrome, le mercure, l'amalgame ou des alliages desdits métaux, à l'exception de ceux à base de zinc ou d'étain ;
- pigments nacrés ;
- supports métallisés, par exemple pigments nacrés (pigments micacés), par exemple par dépôt en phase vapeur d'aluminium ;
- mélanges des pigments ci-dessus.

5. Feuille extérieure selon l'une ou plusieurs des revendications précédentes, **caractérisée en ce que**
- les tailles de pigments moyennes des pigments de couleur argentée se situent dans une plage de 0,1 µm à 100 µm, de préférence dans une plage de 1 µm à 75 µm, de manière particulièrement préférée, dans une plage de 5 µm à 50 µm, et/ou
- que les pigments sont contenus dans au moins une couche de couleur argentée en une concentration de 0,01 à 50 pour cent du poids, de préférence de 0,1 à 50 pour cent du poids, de préférence de 1 à 30 pour cent du poids.

6. Feuille extérieure selon l'une ou plusieurs des revendications précédentes, **caractérisée en ce que** des matières colorantes ou des pigments colorants de couleurs différentes sont incorporés dans la couche extérieure (2a) de la feuille extérieure (2) orientée vers la canalisation en plus des matières colorantes ou des pigments colorants de couleur argentée.

7. Feuille extérieure selon l'une ou plusieurs des revendications précédentes, caractérisée en ce qu'en raison de l'addition de l'au moins un absorbeur UV dans au moins une couche (2b, 2d), le rayonnement dans une gamme de longueurs d'ondes de 200 à 450 nm, de préférence de 250 à 400 nm, est absorbé dans la feuille extérieure (2) intégrale à plus de 95%, de préférence, à plus de 98%, de manière particulièrement préférée à plus de 99,5%.

8. Feuille extérieure selon l'une ou plusieurs des revendications précédentes, **caractérisée en ce que** ledit au moins un absorbeur UV, qui est contenu dans ladite au moins une couche (2b, 2d) de préférence en une concentration de 0,01 à 20 pour cent du poids, de préférence, de 0,1 à 10 pour cent du poids, de manière la plus préférée, de 0,5 à 5 pour cent du poids, est sélectionné dans le groupe comprenant les composés suivants :
- composés inorganiques tels que, par exemple oxydes métalliques, y inclus oxydes métalliques de transition tels que, par exemple oxyde de titane, oxyde de fer et oxyde de zinc, ainsi que hydrates d'oxydes métalliques, y inclus hydrates d'oxydes métalliques de transition ;
- composés organiques, tels que, par exemple, benzotriazoles, triazines, benzophénones et cyanoacrylates ;
- dérivés des composés suscités ;
- mélanges des composés suscités.

9. Feuille extérieure selon l'une ou plusieurs des revendications précédentes, **caractérisée en ce que** l'au moins une couche (2b, 2d), dans laquelle est incorporé l'au moins un absorbeur UV,
- est une couche d'accrochage (2b, 2d) de la feuille extérieure (2), et/ou
- contient au moins un homopolymère ou copolymère d'oléfine thermoplastique, le cas échéant modifié, sachant que lesdits pigments de couleur argentée peuvent également être contenus dans cette couche, et/ou
- est une couche intérieure (2b, 2d) de la feuille extérieure (2).

10. Feuille extérieure selon l'une ou plusieurs des revendications précédentes, caractérisée en ce qu'au moins un absorbeur UV est incorporé dans deux couches (2b, 2d), de préférence respectivement dans une couche intérieure (2b, 2d) de la feuille extérieure (2) et, dans ce contexte, de préférence respectivement dans une couche (2b, 2d) adjacente à l'intérieur à respectivement l'une des couches extérieures (2a, 2e) de la feuille extérieure (2).

11. Feuille extérieure selon l'une ou plusieurs des revendications précédentes, **caractérisée en ce que** l'une ou ses deux couches extérieures (2a, 2e) contiennent :
- au moins un homopolymère ou un copolymère d'oléfine thermoplastique, le cas échéant modifié, et/ou
- au moins un polyamide, le cas échéant modifié, et/ou
- au moins un élastomère thermoplastique (TPE), en particulier TPU, le cas échéant modifié.

12. Feuille extérieure selon l'une ou plusieurs des revendications précédentes, caractérisée en ce qu'au moins une couche barrière intérieure contre la traversée des gaz et/ou les substances chimiques est prévue, sachant que la couche barrière contient de préférence de l'éthylène alcool vinylique (EVOH) ou du polyamide (PA) ou un copolymère de cyclooléfine (COC) ou une combinaison de ces composés, de préférence, respectivement avec jusqu'à 100 pour cent du poids de ces composés.

13. Feuille extérieure selon l'une ou plusieurs des revendications précédentes, **caractérisée en ce que** l'épaisseur totale de la feuille extérieure se situe entre 10 µm et 1000 µm, de préférence entre 20 µm et 500 µm, de manière particulièrement préférée, entre 30 µm et 400 µm.

14. Feuille extérieure selon l'une ou plusieurs des revendications précédentes, caractérisée en ce qu'elle comporte d'une part au moins deux, de préférence exactement deux couches (2a, 2e) avec lesdits pigments de couleur argentée ou lesdites deux couches extérieures métallisées et, d'autre part, au moins deux, de préférence exactement deux couches (2b, 2d) avec ledit au moins un absorbeur UV, sachant que la structure de couches de la feuille extérieure (2) peut être symétrique par rapport aux couches (2a, 2b, 2d, 2e) citées et, dans ce contexte, les couches (2b, 2d) avec respectivement l'au moins un absorbeur UV sont disposées entre les couches (2a, 2e) avec les pigments de couleur argentée ou les couches extérieures métallisées.

15. Feuille extérieure selon l'une ou plusieurs des revendications précédentes, **caractérisée en ce que** la feuille extérieure (2) présente une structure de couches issue du groupe suivant, sachant que la couche (a) est prévue orientée vers la paroi du conduit et la couche (e) vers l'axe du conduit :
1)
couche (a) : PA ou mélange de PA ;
couche (b) : agent d'accrochage avec absorbeur UV ;
couche (c) : PE ou mélange de PE avec pigments de couleur argentée ;
couche (d) : PE ou mélange de PE avec pigments de couleur argentée ;
couche (e) : PE ou mélange de PE avec pigments de couleur argentée ;
avec, le cas échéant, des couches intérieures et/ou extérieures supplémentaires ;
2)
couche (a) : PA ou mélange de PA ;
couche (b) : PA ou mélange de PA ;
couche (c) : agent d'accrochage avec absorbeur UV ;
couche (d) : PE ou mélange de PE avec pigments de couleur argentée ;
couche (e) : PE ou mélange de PE avec pigments de couleur argentée ;
avec, le cas échéant, des couches intérieures et/ou extérieures supplémentaires ;
3)
couche (a) : PE ou mélange de PE avec pigments de couleur argentée ;
couche (b) : agent d'accrochage avec absorbeur UV ;
couche (c) : PA ou mélange de PA ;
couche (d) : agent d'accrochage avec absorbeur UV ;
couche (e) : PE ou mélange de PE avec pigments de couleur argentée ;
avec, le cas échéant, des couches intérieures et/ou extérieures supplémentaires ;
4)
couche (a) : PA ou mélange de PA ;
couche (b) : agent d'accrochage avec absorbeur UV ;
couche (c) : PE ou mélange de PE avec pigments de couleur argentée ;
couche (d) : agent d'accrochage avec absorbeur UV ;
couche (e) : PE ou mélange de PE avec pigments de couleur argentée ;
avec, le cas échéant, des couches intérieures et/ou extérieures supplémentaires ;
sachant que, respectivement, au moins un absorbeur UV supplémentaire peut être ajouté dans au moins une couche intérieure contenant un PE ou un mélange de PE.

16. Assemblage avec une feuille extérieure selon l'une ou plusieurs des revendications précédentes, **caractérisé en ce que** ladite feuille extérieure (2) est doublée d'au moins une feuille supplémentaire ou une matière tissée ou non-tissée et, en particulier, d'une matière absorbante pour la résine et les liquides.

17. Tuyau de chemisage pour la réhabilitation de conduits, en particulier pour la réhabilitation de canalisations sans tranchée, comprenant une feuille extérieure tubulaire (2) selon l'une ou plusieurs des revendications précédentes, avec système porteur (3) tubulaire entouré par la feuille extérieure (2) avec résine durcissable et avec une feuille intérieure (4) perméable au rayonnement UV, entourée par le système porteur (3).

18. Utilisation du tuyau de chemisage (1) selon la revendication précédente pour la réhabilitation d'un conduit, de préférence d'un conduit enseveli, en particulier d'un conduit d'égout (K).
